(19) Europäisches Patentamt / European Patent Office / Office européen des brevets

(11) **EP 4 286 888 A1**

(12) **DEMANDE DE BREVET EUROPEEN**

(43) Date de publication:
**06.12.2023 Bulletin 2023/49**

(21) Numéro de dépôt: **23176257.6**

(22) Date de dépôt: **31.05.2023**

(51) Classification Internationale des Brevets (IPC):
**G01S 7/486** (2020.01)   **G01S 7/4912** (2020.01)
**G01S 17/894** (2020.01)

(52) Classification Coopérative des Brevets (CPC):
**G01S 7/4868; G01S 7/4918; G01S 17/894**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité:  **02.06.2022  FR 2205309**

(71) Demandeurs:
 • **STMICROELECTRONICS (GRENOBLE 2) SAS**
  **38000 Grenoble (FR)**
 • **STMICROELECTRONICS SA**
  **92120 Montrouge (FR)**

(72) Inventeurs:
 • **TEYSSIER, Jeremie**
  **38000 GRENOBLE (FR)**
 • **DROUOT, Antoine**
  **75017 PARIS (FR)**
 • **AUGEY, Thibault**
  **38100 GRENOBLE (FR)**
 • **PENA-LAROCHE, Valérie**
  **38100 GRENOBLE (FR)**

(74) Mandataire: **Casalonga**
  **Casalonga & Partners**
  **Bayerstraße 71/73**
  **80335 München (DE)**

(54) **CAPTEUR DE TEMPS DE VOL ET PROCÉDÉ DE RÉGLAGE D'UN TEMPS D EXPOSITION D'UN TEL CAPTEUR**

(57)    Selon un aspect, il est proposé un capteur de mesure indirecte de temps de vol comportant :
- une matrice de pixels photosensibles (PXM) configurée pour acquérir une succession d'images d'une scène pendant un temps d'exposition donné,
- une unité de contrôle (UC) configurée pour contrôler une acquisition d'une succession d'images par la matrice de pixels (PXM) et pour définir un temps d'exposition pour cette acquisition selon un taux de saturation des pixels de ladite matrice (PXM), des distances (z) entre le capteur et des éléments de la scène et un écart-type ($\sigma_z$) des distances entre le capteur et les éléments de la scène.

[Fig. 1]

## Description

Des modes de réalisation et de mise en oeuvre concernent les capteurs de temps de vol, et plus particulièrement les capteurs de mesure indirecte de temps de vol (également connu par l'acronyme « iTOF » de l'anglais « indirect time of flight »).

Un capteur temps de vol est un capteur permettant de mesurer des distances entre un capteur et des éléments d'une scène. Le capteur temps de vol comporte une matrice de pixels photosensibles. Le capteur temps de vol est configuré pour calculer une distance pour chacun de ses pixels.

Il existe des capteurs de mesure direct de temps de vol et des capteurs de mesure indirect de temps de vol.

Un capteur de mesure direct de temps de vol est configuré pour calculer une distance entre ce capteur et un élément d'une scène à partir d'une mesure du temps entre l'émission du signal par le capteur et la réception du signal réfléchi par ledit élément.

Un capteur de mesure indirecte de temps de vol, désigné également par l'expression « capteur iTOF » dans la suite, est configuré pour calculer une distance entre ce capteur et un élément de la scène à partir d'une mesure d'un décalage de phase entre un signal émis par le capteur et un signal réfléchi par ledit élément et détecté par le capteur.

Chaque pixel photosensible de la matrice délivre des données relatives au signal détecté par ce pixel. La matrice de pixels permet ainsi d'obtenir une matrice de données délivrée par la matrice de pixels. Cette matrice de donnée forme alors une image de la scène.

Plus particulièrement, le capteur iTOF est configuré pour acquérir une pluralité d'images successives de la scène pour déterminer le décalage de phase entre les signaux émis et les signaux réfléchis.

Le capteur iTOF peut être soumis à une grande diversité de conditions de la scène (niveau de lumière ambiante, distance et réflectivité des objets). De ce fait, il convient d'adapter le temps d'exposition du capteur iTOF en fonction des conditions de la scène.

Classiquement, le temps d'exposition du capteur iTOF est adapté en fonction d'un taux de saturation de la matrice de pixels, c'est-à-dire un taux de remplissage des pixels.

En particulier, le temps d'exposition est ajusté jusqu'à ce que le taux de saturation soit supérieur ou égal à un seuil de taux de saturation donné.

Un tel contrôle du temps d'exposition présente l'inconvénient d'augmenter de manière importante le temps d'exposition lorsque la luminosité de la scène est faible.

Or, plus le capteur iTOF est exposé longtemps, plus sa consommation d'énergie est importante.

Il existe donc un besoin de proposer une solution permettant d'optimiser le temps d'exposition des acquisitions d'un capteur iTOF et de réduire la consommation d'énergie d'un tel capteur.

Selon un aspect, il est proposé un capteur de mesure indirecte de temps de vol comportant :

- une matrice de pixels photosensibles configurée pour acquérir une succession d'images d'une scène pendant un temps d'exposition donné,
- une unité de contrôle configurée pour contrôler une acquisition d'une succession d'images par la matrice de pixels et pour définir un temps d'exposition pour cette acquisition selon un taux de saturation des pixels de ladite matrice, des distances entre le capteur et des éléments de la scène et un écart-type des distances entre le capteur et les éléments de la scène.

Un tel capteur de mesure indirecte de temps de vol est ainsi configuré pour adapter le temps d'exposition (également désigné par l'expression « temps d'intégration ») pour une acquisition d'une succession d'images non seulement en fonction d'un taux de saturation du capteur mais aussi en fonction de la distance entre les éléments de la scène et le capteur ainsi que l'écart type des distances entre les éléments de la scène et le capteur. En particulier, la distance entre les éléments de la scène et le capteur ainsi que l'écart type des distances entre les éléments de la scène et le capteur permettent de définir une précision de l'acquisition par rapport à la distance des éléments de la scène par rapport au capteur. Le capteur est donc configuré pour adapter le temps d'exposition en fonction d'un taux de saturation du capteur et une précision de l'acquisition. Un tel réglage du temps d'exposition permet d'optimiser un compromis entre une consommation énergétique du capteur et un rapport signal sur bruit du capteur. En effet, dans certains cas, notamment lorsque le capteur est situé dans une pièce sombre, si le temps d'exposition est réglé seulement en fonction du taux de saturation des pixels, alors le temps d'exposition peut être très long du fait que seule la lumière émise par le capteur peut augmenter le taux de saturation des pixels. Cela entraîne une consommation énergétique importante du capteur et une précision du capteur supérieure à ce qui est souhaité. En prenant en compte la précision de l'acquisition pour définir le temps d'exposition, il est possible de réduire le temps d'exposition pour obtenir une précision souhaitée et une saturation souhaitée des pixels. Le capteur permet donc d'éviter une augmentation non souhaitée du temps d'exposition qui entraînerait une trop grande précision du capteur par rapport à la distance des éléments de la scène par rapport au capteur.

Dans un mode de réalisation avantageux, l'unité de contrôle est configurée pour définir le temps d'exposition pour chaque acquisition à partir du taux de saturation des pixels de ladite matrice et d'une précision du capteur correspondant à un rapport entre les distances entre le capteur et des éléments de la scène et l'écart-type des distances entre le capteur et les éléments de la scène.

Dans un mode de réalisation avantageux, l'unité de contrôle est configurée pour comparer le taux de saturation des pixels à un seuil de taux de saturation, et pour :

- si le taux de saturation des pixels est supérieur audit seuil de taux de saturation, réduire le temps d'exposition,
- sinon comparer ladite précision à un seuil de précision, et

  o si la précision est supérieure audit seuil de précision, réduire le temps d'exposition,
  o sinon, augmenter le temps d'exposition.

Le taux de saturation est ainsi la première statistique vérifiée pour définir le temps d'exposition. Cela permet d'éviter de saturer les pixels de la matrice.

De préférence, l'unité de contrôle est configurée pour ajuster le temps d'exposition du capteur en augmentant ou en réduisant la valeur du temps d'exposition d'un pourcentage compris entre un pas minimum et un pas maximum. Ce pas minimum et ce pas maximum sont des paramètres définis connus par l'unité de contrôle.

Avantageusement, la précision est évaluée à partir de la formule mathématique $\frac{z^2}{\sigma_z^2}$, dans laquelle z est une distance entre un élément de la scène par rapport au capteur et $\sigma_z$ est l'écart-type des distances entre le capteur et les éléments de la scène.

La formule mathématique $\frac{z^2}{\sigma_z^2}$ présente l'avantage de varier linéairement par rapport au temps d'exposition.

Dans un mode de réalisation avantageux, si le seuil de taux de saturation est incompatible avec le seuil de précision, alors l'unité de contrôle est configurée pour mettre à jour le seuil de précision avec le taux de saturation. Cela permet d'éviter un phénomène de clignotement de la luminosité des images acquises.

Selon un autre aspect, il est proposé un procédé de définition d'un temps d'exposition pour une acquisition d'une succession d'images d'une scène par des pixels photosensibles d'une matrice de pixels d'un capteur de mesure indirecte de temps de vol pendant un temps d'exposition donné, le procédé comprenant une définition du temps d'exposition pour ladite acquisition selon un taux de saturation des pixels de ladite matrice, des distances entre le capteur et des éléments de la scène et un écart-type des distances entre le capteur et les éléments de la scène.

De préférence, le procédé comporte une définition du temps d'exposition pour ladite acquisition à partir du taux de saturation des pixels de ladite matrice et d'une précision du capteur correspondant à un rapport entre les distances entre le capteur et des éléments de la scène et l'écart-type des distances entre le capteur et les éléments de la scène.

Avantageusement, le procédé comporte une comparaison du taux de saturation des pixels à un seuil de taux de saturation, et

- si le taux de saturation des pixels est supérieur audit seuil de taux de saturation, une réduction du temps d'exposition,
- sinon une comparaison de ladite précision à un seuil de précision ($T_{prec}$), et

  o si la précision est supérieure audit seuil de précision, une réduction du temps d'exposition,
  o sinon, une augmentation du temps d'exposition.

Dans un mode de mise en oeuvre avantageux, le procédé comporte un ajustement du temps d'exposition du capteur en augmentant ou en réduisant la valeur du temps d'exposition d'un pourcentage compris entre un pas minimum et un pas maximum.

De préférence, la précision est évaluée à partir de la formule mathématique $\frac{z^2}{\sigma_z^2}$, dans laquelle z est une distance entre un élément de la scène par rapport au capteur et $\sigma_z$ est l'écart-type des distances entre le capteur et les éléments de la scène.

Dans un mode de mise en oeuvre avantageux, si le seuil de taux de saturation est incompatible avec le seuil de précision, alors le procédé comprend une mise à jour du seuil de précision avec le taux de saturation.

D'autres avantages et caractéristiques de l'invention apparaîtront à l'examen de la description détaillée de modes de réalisation, nullement limitatifs, et des dessins annexés sur lesquels :

  [Fig 1]
  [Fig 2]
  [Fig 3]

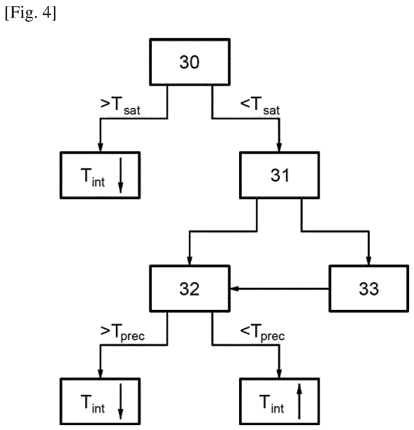

  [Fig 4] illustrent des modes de réalisation et de mise en oeuvre de l'invention.

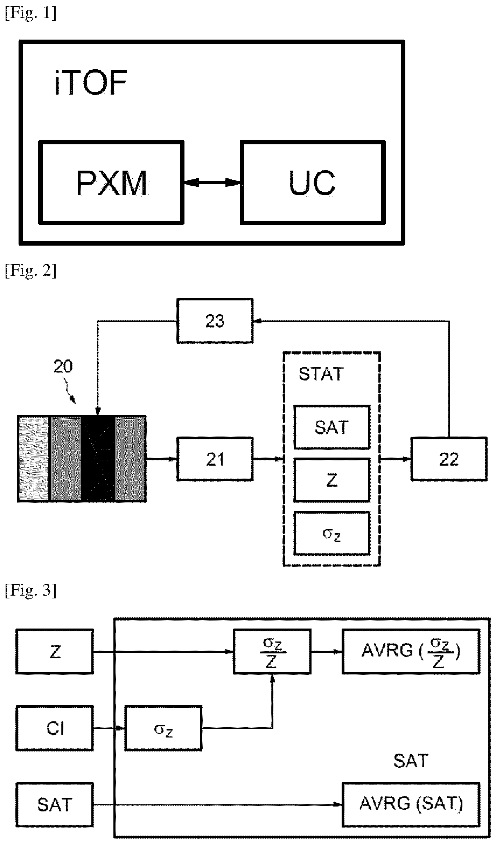

La figure 1 illustre un capteur de mesure indirecte de temps de vol (capteur iTOF). Le capteur iTOF comporte une matrice de pixels PXM. Le capteur iTOF comporte également une unité de contrôle UC configurée pour contrôler la matrice de pixels PXM.

Le capteur iTOF est configuré pour émettre un signal lumineux dans une scène dans laquelle le capteur iTOF est placé. Ce signal lumineux peut alors être réfléchi par les différents éléments de la scène vers la matrice de pixels PXM.

La matrice de pixels PXM est configurée pour effectuer des acquisitions de successions d'images de la scène en accumulant les signaux lumineux qu'elle détecte.

Les successions d'images acquises permettent à l'unité de contrôle UC de déterminer un décalage de phase entre le signal émis par le capteur et les signaux réfléchis par les éléments de la scène et détectés par la matrice de pixels PXM. L'unité de contrôle UC est alors configurée pour calculer une distance entre ce capteur et les éléments de la scène à partir du décalage de phase déterminé.

L'acquisition des images est effectuée pendant un temps d'exposition adaptable de façon à compenser les différentes luminosités des images acquises.

L'unité de contrôle UC est également configurée pour adapter le temps d'exposition des pixels de ladite matrice PXM pour chaque acquisition d'une succession d'images.

Le temps d'exposition est adapté en fonction du procédé de réglage du temps d'exposition décrit ci-après en relation avec la figure 2.

La figure 2 illustre un procédé de réglage du temps d'exposition des pixels d'une matrice de pixels PXM d'un capteur iTOF tel que celui illustré à la figure 1.

Le procédé de réglage comporte une étape 20 d'acquisition dans laquelle une succession d'images est acquise par la matrice de pixels PXM pendant un temps d'exposition $T_{int}$ donné. Les pixels délivrent alors les données acquises à l'unité de contrôle.

Le procédé de réglage comprend en outre une étape 21 de détermination de statistiques STAT à prendre en compte pour le réglage du temps d'exposition $T_{int}$. Comme illustré à la figure 3, les statistiques à prendre en compte sont un taux de saturation SAT des pixels (correspondant à la moyenne AVG(SAT) du taux de saturation SAT de chaque pixel), les distances Z entre les éléments de la scène et le capteur et l'écart-type de ces distances $\alpha_z$. Ainsi, la détermination desdites statistiques comporte une détermination d'un taux de saturation SAT des pixels. La détermination desdites statistiques comporte également un calcul de distances Z des éléments de la scène par rapport au capteur à partir des données délivrées par les pixels. La détermination desdites statistiques comporte en outre un calcul d'un écart-type $\sigma_z$ des distances des éléments de la scène par rapport au capteur. L'écart-type est calculé à partir d'un indice de confiance CI déterminé par l'unité de contrôle UC.

En particulier, les distances entre les éléments de la scène et le capteur et l'écart-type des distances sont utilisés pour déterminer une précision des mesures par rapport aux distances. En particulier, la précision est déterminée par la formule $\dfrac{\sigma_z}{z}$, où z correspond à la distance d'un élément de la scène par rapport au capteur, et $\sigma_z$ correspond à l'écart-type des distances des éléments de la scène par rapport au capteur. Une moyenne de la précision AVG($\dfrac{\sigma_z}{z}$) correspondant à la précision de ladite succession d'images acquises. Néanmoins, pour des raisons de simplification, il est préférable d'utiliser la formule $\dfrac{z^2}{\sigma_z^2}$ pour évaluer la précision du capteur. En effet, cette formule présente l'avantage de varier linéairement par rapport au temps d'exposition.

Le procédé de réglage comporte ensuite une étape 22 de détermination d'un temps d'exposition $T_{int}$ à appliquer. Dans cette étape 22, l'unité de contrôle UC détermine le temps d'exposition $T_{int}$ à appliquer pour une prochaine acquisition d'images en fonction des statistiques déterminées à l'étape 21.

Enfin, le procédé de réglage comporte une étape 23 de mise à jour du temps d'exposition $T_{int}$. Dans cette étape 23, l'unité de contrôle UC met à jour le temps d'exposition à appliquer pour la prochaine acquisition par le temps d'exposition $T_{int}$ déterminé à l'étape 22.

Les étapes 20 à 23 sont répétées pour chaque acquisition d'images.

La figure 4 illustre l'étape 22 de détermination du temps d'exposition $T_{int}$ à appliquer pour une prochaine acquisition. Cette étape 22 de détermination du temps d'exposition comporte tout d'abord une comparaison 30 du taux de saturation calculé à l'étape 21 par rapport à un seuil de taux de saturation $T_{sat}$ donné. Un taux de saturation mesuré supérieur audit seuil de taux de saturation $T_{sat}$ signifie que les pixels de ladite matrice PXM sont surexposés. Un taux de saturation mesuré inférieur audit seuil de taux de saturation $T_{sat}$ signifie que les pixels de ladite matrice PXM sont sous-exposés.

Si le taux de saturation calculé est supérieur audit seuil de taux de saturation $T_{sat}$ donné, alors le temps d'exposition $T_{int}$ à appliquer est diminué par rapport au temps d'exposition $T_{int}$ précédemment appliqué.

Si le taux de saturation calculé est inférieur audit seuil de taux de saturation donné, alors l'étape 22 comporte une comparaison 31 du seuil de taux de saturation $T_{sat}$ et du seuil de précision $T_{prec}$ permettant de déterminer si le seuil de taux de saturation $T_{sat}$ donné est compatible avec un seuil de précision $T_{prec}$ donné.

Le fait de comparer dans un premier temps le taux de saturation audit seuil de taux de saturation $T_{sat}$ permet d'éviter de saturer les pixels de la matrice.

Si le seuil de taux de saturation $T_{sat}$ donné est compatible avec le seuil de précision $T_{prec}$ donné, alors l'étape 22 comporte une comparaison 32 entre une précision calculée et ledit seuil de précision $T_{prec}$ donné. Une précision supérieure audit seuil de précision $T_{prec}$ signifie que les données acquises de la matrice de pixels PXM sont trop précises. Une précision inférieure audit seuil de précision $T_{prec}$ signifie que les données acquises de la matrice de pixels PXM ne sont pas suffisamment précises.

Si la précision calculée est supérieure au seuil de précision $T_{prec}$ donné, alors le temps d'exposition $T_{int}$ à appliquer est diminué par rapport au temps d'exposition $T_{int}$ précédemment appliqué.

Si la précision calculée est inférieure au seuil de précision $T_{prec}$ donné, alors le temps d'exposition $T_{int}$ à appliquer est augmenté par rapport au temps d'exposition $T_{int}$ précédemment appliqué.

Par ailleurs, si le seuil de taux de saturation $T_{sat}$ donné est incompatible avec le seuil de précision $T_{prec}$ donné, alors l'étape 22 comporte une mise à jour 33 du seuil de précision $T_{prec}$ avec le taux de saturation $T_{sat}$. En pratique, le seuil de précision $T_{prec}$ est mis à jour à une valeur proportionnelle à $T_{sat}$ afin d'éviter un phénomène de clignotement de la luminosité des images. Le coefficient de proportionnalité étant un paramètre ajustable de l'algorithme compris entre zéro et un. Ensuite, l'étape 22 comporte ladite comparaison 32 entre la précision calculée et ledit seuil de précision $T_{prec}$ donné, avant d'ajuster le temps d'exposition $T_{int}$ comme décrit précédemment.

Lors de l'étape 22, l'unité de contrôle UC ajuste ainsi le temps d'exposition du capteur en augmentant ou en réduisant la valeur du temps d'exposition $T_{int}$ d'un pourcentage compris entre un pas minimum et un pas maximum. Ce pas minimum et ce pas maximum sont des paramètres définis de l'algorithme et connus par l'unité de contrôle.

Le capteur iTOF est donc configuré pour adapter le temps d'exposition pour une acquisition d'une succession d'images non seulement en fonction d'un taux de saturation du capteur mais aussi en fonction de la distance entre les éléments de la scène et le capteur ainsi que de l'écart type des distances entre les éléments de la scène et le capteur.

En particulier, la distance entre les éléments de la scène et le capteur iTOF ainsi que l'écart type des distances entre les éléments de la scène et le capteur permettent de définir une précision de l'acquisition par rapport à la distance des éléments de la scène par rapport au capteur.

Le capteur iTOF est donc configuré pour adapter le temps d'exposition en fonction d'un taux de saturation du capteur et une précision de l'acquisition. Un tel réglage du temps d'exposition permet d'optimiser un compromis entre une consommation énergétique du capteur et un rapport signal sur bruit du capteur. En prenant en compte la précision de l'acquisition pour définir le temps d'exposition, il est possible de réduire le temps d'exposition pour obtenir une précision souhaitée et une saturation souhaitée des pixels. Le capteur permet donc d'éviter une augmentation non souhaitée du temps d'exposition qui entraînerait une trop grande précision du capteur par rapport à la distance des éléments de la scène par rapport au capteur.

**Revendications**

1. Capteur de mesure indirecte de temps de vol comportant :

- une matrice de pixels photosensibles (PXM) configurée pour acquérir une succession d'images d'une scène pendant un temps d'exposition donné,
- une unité de contrôle (UC) configurée pour contrôler une acquisition d'une succession d'images par la matrice de pixels (PXM) et pour définir un temps d'exposition pour cette acquisition selon un taux de saturation des pixels de ladite matrice (PXM), des distances (z) entre le capteur et des éléments de la scène et un écart-type ($\sigma_z$) des distances entre le capteur et les éléments de la scène.

2. Capteur selon la revendication 1, dans lequel l'unité de contrôle (UC) est configurée pour définir le temps d'exposition ($T_{int}$) pour ladite acquisition à partir du taux de saturation des pixels de ladite matrice (PXM) et d'une précision du capteur.

3. Capteur selon la revendication 2, dans lequel la précision du capteur correspond à un rapport entre les distances (z) entre le capteur et des éléments de la scène et l'écart-type ($\sigma_z$) des distances entre le capteur et les éléments de la scène.

4. Capteur selon la revendication 2, dans lequel la précision est évaluée à partir de la formule mathématique $\dfrac{z^2}{\sigma_z^2}$, dans laquelle z est une distance entre un élément de la scène par rapport au capteur et $\sigma_z$ est l'écart-type des distances entre le capteur et les éléments de la scène.

5. Capteur selon l'une des revendications 2 à 4, dans lequel l'unité de contrôle (UC) est configurée pour comparer le taux de saturation des pixels à un seuil de taux de saturation ($T_{sat}$), et pour

- si le taux de saturation des pixels est supérieur audit seuil de taux de saturation ($T_{sat}$), réduire le temps d'exposition ($T_{int}$),
- sinon comparer ladite précision à un seuil de précision ($T_{prec}$), et

  ∘ si la précision est supérieure audit seuil de précision ($T_{prec}$), réduire le temps d'exposition ($T_{int}$),
  ∘ sinon, augmenter le temps d'exposition ($T_{int}$).

6. Capteur selon la revendication 5, dans lequel, si le seuil de taux de saturation ($T_{sat}$) est incompatible avec le seuil de précision ($T_{prec}$), alors l'unité de contrôle est configurée pour mettre à jour le seuil de précision ($T_{prec}$) avec le taux de saturation ($T_{sat}$).

**7.** Capteur selon l'une des revendications 5 ou 6, dans lequel l'unité de contrôle (UC) est configurée pour ajuster le temps d'exposition du capteur en augmentant ou en réduisant la valeur du temps d'exposition ($T_{int}$) d'un pourcentage compris entre un pas minimum et un pas maximum.

**8.** Procédé de définition d'un temps d'exposition pour une acquisition d'une succession d'images d'une scène par des pixels d'une matrice de pixels photosensibles (PXM) d'un capteur de mesure indirecte de temps de vol pendant un temps d'exposition donné, le procédé comprenant une définition du temps d'exposition pour ladite acquisition selon un taux de saturation des pixels de ladite matrice (PXM), des distances entre le capteur et des éléments de la scène et un écart-type des distances entre le capteur et les éléments de la scène.

**9.** Procédé selon la revendication 8, comportant une définition du temps d'exposition ($T_{int}$) pour ladite acquisition à partir du taux de saturation des pixels de ladite matrice (PXM) et d'une précision du capteur.

**10.** Procédé selon la revendication 9, dans lequel la précision correspond à un rapport entre les distances (z) entre le capteur et des éléments de la scène et l'écart-type ($\sigma_z$) des distances entre le capteur et les éléments de la scène.

**11.** Procédé selon la revendication 9, dans lequel la précision est évaluée à partir de la formule mathématique $\frac{z^2}{\sigma_z^2}$, dans laquelle z est une distance entre un élément de la scène par rapport au capteur et $\sigma_z$ est l'écart-type des distances entre le capteur et les éléments de la scène.

**12.** Procédé selon l'une des revendications 9 à 11, comportant une comparaison du taux de saturation des pixels à un seuil de taux de saturation ($T_{sat}$), et

> - si le taux de saturation des pixels est supérieur audit seuil de taux de saturation ($T_{sat}$), une réduction du temps d'exposition ($T_{int}$),
> - sinon une comparaison de ladite précision à un seuil de précision ($T_{prec}$), et

>> ∘ si la précision est supérieure audit seuil de précision ($T_{prec}$), une réduction du temps d'exposition ($T_{int}$),
>> ∘ sinon, une augmentation du temps d'exposition ($T_{int}$).

**13.** Procédé selon la revendication 12, dans lequel, si le seuil de taux de saturation ($T_{sat}$) est incompatible avec le seuil de précision ($T_{prec}$), alors le procédé comprend une mise à jour du seuil de précision ($T_{prec}$) avec le taux de saturation ($T_{sat}$).

**14.** Procédé selon l'une des revendications 12 ou 13, comportant un ajustement du temps d'exposition ($T_{int}$) du capteur en augmentant ou en réduisant la valeur du temps d'exposition ($T_{int}$) d'un pourcentage compris entre un pas minimum et un pas maximum.

[Fig. 1]

[Fig. 2]

[Fig. 3]

[Fig. 4]

Europäisches
Patentamt

European
Patent Office

Office européen
des brevets

# RAPPORT DE RECHERCHE EUROPEENNE

Numéro de la demande

EP 23 17 6257

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2013/307968 A1 (FORSTER FLORIAN [DE]) 21 novembre 2013 (2013-11-21) * alinéas [0025] – [0032]; figures 1,4,5 * ----- | 1-3,5, 8-11 | INV. G01S7/486 G01S7/4912 G01S17/894 |
| A | DE 10 2019 104566 A1 (PMDTECHNOLOGIES AG [DE]) 27 août 2020 (2020-08-27) * alinéas [0012], [0013], [0055] – [0066] * ----- | 1-14 | |
| A | ADRIAN P P JONGENELEN ET AL: "Analysis of Errors in ToF Range Imaging With Dual-Frequency Modulation", IEEE TRANSACTIONS ON INSTRUMENTATION AND MEASUREMENT, IEEE, USA, vol. 60, no. 5, 1 mai 2011 (2011-05-01), pages 1861-1868, XP011352290, ISSN: 0018-9456, DOI: 10.1109/TIM.2010.2089190 * le document en entier * ----- | 1-14 | |

DOMAINES TECHNIQUES RECHERCHES (IPC)

G01S

Le présent rapport a été établi pour toutes les revendications

| Lieu de la recherche | Date d'achèvement de la recherche | Examinateur |
|---|---|---|
| Munich | 20 octobre 2023 | Kern, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 23 17 6257

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-10-2023

| Document brevet cité au rapport de recherche | Date de publication | Membre(s) de la famille de brevet(s) | Date de publication |
|---|---|---|---|
| US 2013307968 A1 | 21-11-2013 | DE 102010043768 B3 | 15-12-2011 |
| | | EP 2622365 A1 | 07-08-2013 |
| | | US 2013307968 A1 | 21-11-2013 |
| | | WO 2012041607 A1 | 05-04-2012 |
| DE 102019104566 A1 | 27-08-2020 | AUCUN | |

EPO FORM P0460

Pour tout renseignement concernant cette annexe : voir Journal Officiel de l'Office européen des brevets, No.12/82